(19) Europäisches Patentamt
European Patent Office
Office européen des brevets

(11) **EP 4 420 770 B1**

(12) **EUROPEAN PATENT SPECIFICATION**

(45) Date of publication and mention
of the grant of the patent:
**30.07.2025 Bulletin 2025/31**

(21) Application number: **23158120.8**

(22) Date of filing: **23.02.2023**

(51) International Patent Classification (IPC):
***B01J 8/06*** *(2006.01)*

(52) Cooperative Patent Classification (CPC):
**B01J 8/067**

(54) **BEARING ARRANGEMENT FOR A STEAM REFORMER TUBE**

LAGERANORDNUNG FÜR EIN DAMPFREFORMERROHR

AGENCEMENT DE PALIER POUR TUBE DE REFORMAGE À LA VAPEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**28.08.2024 Bulletin 2024/35**

(73) Proprietor: **L'Air Liquide, Société Anonyme pour
l'Etude
et l'Exploitation des Procédés Georges Claude
75007 Paris (FR)**

(72) Inventors:
• **Kaiser, Tobias
60439 Frankfurt am Main (DE)**
• **Coscia, Antonio
60439 Frankfurt am Main (DE)**

(74) Representative: **Air Liquide
L'Air Liquide S.A.
Direction de la Propriété Intellectuelle
75, Quai d'Orsay
75321 Paris Cedex 07 (FR)**

(56) References cited:
WO-A1-94/29013          CN-A- 113 559 793
US-A- 3 713 784          US-A1- 2005 287 053
US-A1- 2014 069 612

## Description

## TECHNICAL FIELD

The present invention relates generally to a reformer tube and piping system for a steam reformer; more specifically, the present invention relates to a reformer tube for a steam reformer with a bearing arrangement to absorb thermal expansions. The present invention also relates to a process for steam reforming a hydrocarbonaceous feed stream with steam to form a synthesis gas stream containing carbon monoxide and hydrogen.

## BACKGROUND

In steam-methane based synthesis gas production, the previously superheated mixture of natural gas and steam is fed to individual cracking tubes, which are arranged in a cracking tube furnace, via a piping system for feed distribution. The operating temperatures of the piping system can be up to 650 °C resulting in considerable thermal expansion. The reactant feed line or manifold has an outlet for each connected reformer tube also referred to as a hairpin or a pigtail to absorb thermal expansions. Typically, the reformer tube is connected to the respective outlet via a pipe of the same or also smaller diameter than the reactant feed line or distributor itself. During operation, the reactant feed line and the reformer tube undergo elongation in the vertical direction due to thermal expansion, which also changes the position of the reactant feed line or manifold in the vertical direction. During operation, the reformer tubes experience a thermal expansion (dA) of up to 300 millimeters (mm) (e.g. upward thermal linear expansion). Due to the arrangement as described above, this upward expansion may be absorbed by a reactant distributor.

The stresses resulting from the thermal expansion, and resulting elongation ($d_{comp}$) are generally absorbed or compensated for by a flexible design of the outlets (i.e. hairpins or pigtails). The resultant elongation ($d_{comp}$) is the difference between the elongation of the reactant feed line (dB) and the elongation of the reformer tube, and the equation is as follows:

$$d_{comp} = dA - dB$$

The resulting elongation ($d_{comp}$) can be approximately 70 to 30 % of the elongation of the reformer tubes, depending on the steam reformer size.

Thermal linear expansions and displacements of the reactant feed line and/or manifold, resulting from the operating temperature of the system, and the thermal linear expansions and displacements of the feeders, resulting from the operating temperature of the system and the thermal linear expansion of the reformer tubes, are addressed by existing systems separately. One of the existing systems includes a combination of floating and fixed bearings in the reactant feed line/distributor. The floating bearings may be guides and cantilever hangers or similar pipeline supports. Another existing solution provides outlets as soft as possible with pipe routing with correspondingly large expansion bends. Short pipe routing, however, minimizes heat losses of the system and reduces the necessary material input. The outlets (e.g. a reactant distribution system) is one of the main sources of heat loss in the entire synthesis gas plant. Due to the necessary expansion bends or loops at the outlets, a high overall height and/or width depending on the configuration of the piping system results, which is usually housed in the "penthouse" (i. e. the upper, roofed part) of the reformer furnace generally provided for weather protection and reduction of heat losses due to wind effects. As a result, in addition to the steel structure, other piping such as for fuel gases, and combustion air must also be made longer in accordance with the resulting distances. This also increases heat losses of the other distribution systems and the construction costs of the entire structure.

US2005/287053 discloses a reactor furnace with a reformer tube.

Therefore, there is a need to address the aforementioned technical drawbacks in existing known technologies for providing reformer tubes for a steam reformer with efficient thermal expansion absorption capabilities.

## SUMMARY

The present invention seeks to provide a reformer tube for a steam reformer where capital costs are dominant in determining the overall economics. The present invention aims to provide a solution that overcomes, at least partially, the problems encountered in the prior art by using a rigid connection in combination with a floating bearing for absorbing stress forces due to the thermal expansion of a pressure-bearing cylindrical jacket tube of the reformer tube in a radial direction. The thermal linear expansion of the reformer tube is completely transferred from a product discharge line to a connected reactant feed line and compensated by the reactant feed line by means of the floating bearing. Thus, the additional expansion bends in the reactant feed line are avoided, thereby reducing the pipe length of the reformer tube in a synthesis gas plant.

The object of the present invention is achieved by the solutions provided in the enclosed independent claims. Advantageous implementations of the present invention are further defined in the dependent claims.

According to a first aspect, the reformer tube for a steam reformer according to the present invention comprises:

(a) a pressure-bearing cylindrical jacket tube arranged to contain a catalyst as a bulk catalyst, a catalyst bed of catalyst particles, structured packing, honeycomb catalyst, or combinations thereof;

(b) an inlet end of the pressure-bearing cylindrical jacket tube connectable to a reactant feed line;

(c) the reactant feed line connectable to a reactant feed system;

(d) an outlet end of the pressure-bearing cylindrical jacket tube connectable to a product discharge line;

(e) the product discharge line connectable to a product gas manifold; wherein

(f) the pressure-bearing cylindrical jacket tube is supported in the direction of its longitudinal axis by means of a fixed-floating bearing arrangement to allow thermal expansion of the pressure-bearing cylindrical jacket tube in longitudinal direction, wherein

(g) the fixed bearing is located at the outlet end of the outer pressure-bearing cylindrical jacket tube and the floating bearing is located at the inlet end of the outer pressure-bearing cylindrical jacket tube.

The reformer tube and the bearing arrangement of the reformer tube according to the present invention are of advantage in that a rigid connection in combination with the floating bearing is used for absorbing stress forces due to the thermal expansion of the pressure-bearing cylindrical jacket tube of the reformer tube in an axial (longitudinal) and/or radial direction. The thermal linear expansion of the reformer tube is completely transferred from the product discharge line to the connected reactant feed line and compensated by the reactant feed line by means of the floating bearing. Thus, the additional expansion bends in the reactant feed line (i.e. hairpins, pigtails) are avoided, thereby reducing the overall height or size of an entire synthesis gas plant system, and also reducing heat losses by shortening the transfer lines, namely the reactant feed line, and the product discharge line. Moreover, due to the large vertical transmission of forces via the product discharge line into the reactant feed line, the bending forces, loads, and stresses acting on the product discharge line are reduced which results in an increase in the expected service life and an increase in the operational reliability of the reformer furnace.

According to a second aspect, the present invention provides a reformer furnace comprising a floor, a ceiling and side walls forming a furnace interior, wherein a plurality of reformer tubes as described above are arranged within the furnace interior and are heated by burners.

According to a third aspect, the present invention provides a process for steam reforming a hydrocarbonaceous feed stream with steam to form a synthesis gas stream containing carbon monoxide and hydrogen, comprising the steps of:

(a) providing a plurality of reformer tubes as described above in a reformer furnace;

(b) connecting the reactant feed lines of the reformer tubes to a common reactant feed system;

(c) connecting the product discharge lines of the reformer tubes to a common product gas manifold;

(d) injecting the hydrocarbonaceous feed stream through the reactant feed system and the reactant feed lines of the reformer tubes;

(e) reacting the hydrocarbonaceous feed stream with steam in the reformer tubes under steam reforming conditions to form a crude synthesis gas stream;

(f) discharging the crude synthesis gas stream from the reformer tubes via the product discharge lines and the common product gas manifold;

(g) feeding the crude synthesis gas stream to at least one further work-up, separation, purification or conditioning step, and discharging a purified or conditioned synthesis gas stream and/or its constituents hydrogen and/or carbon monoxide.

The reformer tube and the bearing arrangement of the reformer tube according to the present invention are of advantage in that a rigid connection in combination with the floating bearing is used for absorbing stress forces due to the thermal expansion of the pressure-bearing cylindrical jacket tube of the reformer tube in an axial (longitudinal) and/or radial direction. The thermal linear expansion of the reformer tube is completely transferred from the product discharge line to the connected reactant feed line and compensated by the reactant feed line by means of the floating bearing. Thus, the additional expansion bends in the reactant feed line (i.e. hairpins, pigtails) are avoided, thereby reducing the overall height or size of an entire synthesis gas plant system, and also reducing heat losses by shortening the transfer lines, namely the reactant feed line, and the product discharge line. Moreover, due to the large vertical transmission of forces via the product discharge line into the reactant feed line, the bending forces, loads, and stresses acting on the product discharge line are reduced which results in an increase in the expected service life and an increase in the operational reliability of the reformer furnace.

Embodiments of the present invention eliminate the aforementioned drawbacks in existing known approaches by providing a rigid connection in combination with the fixed-floating bearing arrangement in the reformer tube for absorbing stress forces due to thermal expansion in the reformer tube.

Additional aspects, advantages, features, and objects of the present invention are made apparent from the drawings and the detailed description of the illustrative embodiments construed in conjunction with the appended claims that follow. It will be appreciated that features of the present invention are susceptible to being combined in various combinations without departing from the scope of the present invention as defined by the appended claims.

## BRIEF DESCRIPTION OF THE DRAWINGS

The summary above, as well as the following detailed description of illustrative embodiments, is better understood when read in conjunction with the appended drawings. To illustrate the present invention, exemplary constructions of the invention are shown in the drawings. However, the present invention is not limited to specific methods and instrumentalities disclosed herein. Moreover, those in the art will understand that the drawings are not to scale. Wherever possible, the same elements have been indicated by identical numbers. Embodiments of the present invention will now be described, by way of example only, with reference to the following diagrams wherein:

**FIGS. 1A-1D** are schematic illustrations of arrangements and configurations of reformed tubes in a reformer furnace according to the prior art;

**FIG. 2** is a schematic illustration a reformer furnace with a double reactant feed system according to an embodiment of the present invention;

**FIG. 3** is a schematic illustration a reformer furnace with a single reactant feed system according to an embodiment of the present invention.

## DETAILED DESCRIPTION OF EMBODIMENTS

The following detailed description illustrates embodiments of the present invention and ways in which they can be implemented. Although some modes of carrying out the present invention have been disclosed, those skilled in the art would recognize that other embodiments for carrying out or practicing the present invention are also possible.

Steam reforming conditions are known to those skilled in the art from the prior art. These are the physicochemical conditions under which a measurable, preferably industrially relevant, conversion of hydrocarbons to synthesis gas products is achieved. For example, in the context of steam reforming, important parameters include adjustment of a suitable steam reforming entry temperature of typically about 1000 °C and addition of steam to the input gas containing hydrocarbons and thus adjustment of a steam/carbon ratio (S/C ratio). Typical values for the S/C ratio are between 1.5 and 3.5 mol/mol. Typical steam reforming inlet temperatures are up to 700 °C and typically range between 550 and 650 °C. Necessary adjustments of these conditions to the respective operational requirements will be made by those skilled in the art on the basis of routine experiments. Any specific reaction conditions disclosed may serve here as a guide, but they should not be regarded as limiting in relation to the scope of the invention.

A fluid connection between two regions of an apparatus or a plant or a reformer furnace according to the invention is to be understood as meaning any type of connection whatsoever which makes it possible for a fluid, for example a gas stream, to flow from one to the other of the two regions, neglecting any interposed regions or components. In particular a direct fluid connection is to be understood as meaning any type of connection whatsoever which makes it possible for a fluid, for example a gas stream, to flow directly from one to the other of the two regions, wherein no further regions or components are interposed with the exception of purely transportation operations and the means required therefor, for example pipelines, valves, pumps, compressors, reservoirs. One example would be a pipeline leading directly from one to the other of the two regions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e., for example pipelines, pumps, compressors, valves, which seem necessary or sensible to said skilled person for performance of this process step on the basis of his knowledge of the art.

For the purposes of this description steam is to be understood as being synonymous with water vapor unless the opposite is indicated in an individual case. By contrast, the term "water" refers to water in the liquid state of matter unless otherwise stated in an individual case.

In the context of the present invention, the reactant feed line or distributor is connected to one or more series or rows of reformer tubes through an individual outlet, by having a maximum of change of direction in 90°. The thermal linear expansion of the reformer tube is transferred from the outlets to the connected reactant feed line and is compensated by the reactant feed line of a corresponding floating bearing. The reactant feed line or distributor has only one fixed bearing in the axial (longitudinal) direction of the distributor.

According to a first aspect, the present invention provides a reformer tube for a steam reformer, comprising:

(a) a pressure-bearing cylindrical jacket tube arranged to contain a catalyst as a bulk catalyst, a catalyst bed of catalyst particles, structured packing, honeycomb catalyst, or combinations thereof;

(b) an inlet end of the pressure-bearing cylindrical jacket tube connectable to a reactant feed line;

(c) the reactant feed line connectable to a reactant feed system;

(d) an outlet end of the pressure-bearing cylindrical jacket tube connectable to a product discharge line;

(e) the product discharge line connectable to a product gas manifold;
wherein

(f) the pressure-bearing cylindrical jacket tube is supported in the direction of its longitudinal axis by means of a fixed-floating bearing arrangement to allow thermal expansion of the pressure-bearing cylindrical jacket tube in longitudinal direction, wherein

(g) the fixed bearing is located at the outlet end of the outer pressure-bearing cylindrical jacket tube and the floating bearing is located at the inlet end of the outer pressure-bearing cylindrical jacket tube.

The reformer tube and the bearing arrangement of the reformer tube according to the present invention are of advantage in that a rigid connection in combination with the floating bearing is used for absorbing stress forces due to the thermal expansion of the pressure-bearing cylindrical jacket tube of the reformer tube in an axial (longitudinal) and/or radial direction. The thermal linear expansion of the reformer tube is completely transferred from the product discharge line to the connected reactant feed line and compensated by the reactant feed line by means of the floating bearing. Thus, the additional expansion bends in the reactant feed line (i.e. hairpins, pigtails) are avoided, thereby reducing the overall height or size of an entire synthesis gas plant system, and also reducing heat losses by shortening the transfer lines, namely the reactant feed line, and the product discharge line. Moreover, due to the large vertical transmission of forces via the product discharge line into the reactant feed line, the bending forces, loads, and stresses acting on the product discharge line are reduced which results in an increase in the expected service life and an increase in the operational reliability of the reformer furnace.

Optionally, the reactant feed line has only one single change of direction, preferably only one single change of direction of 90°. While this increases the number of expansion bends by one as compared to a entirely straight connection, the arrangement is still robust and serves to decrease the building height of the steam reformer, and reduces the length of the connection lines and the heat losses related thereto.

Optionally, the product discharge line has no change of direction and its longitudinal axis coincides with or is aligned with the longitudinal axis of the pressure-bearing cylindrical jacket tube. In this way, expansion stresses occur predominantly one-dimensional in the direction of the longitudinal axis of the pressure-bearing cylindrical jacket tube, and can be accounted for in the construction of the reformer furnace and its framework in a simple manner.

Optionally, the floating bearing is designed as a rolling bearing, ball bearing, plain bearing or floating support bearing.

Optionally, the floating bearing and the fixed bearing are designed such that they can absorb stress forces due to thermal expansion of the pressure-bearing cylindrical jacket tube in the radial direction. While the longitudinal length increase of the reformer tubes during heat-up of the reformer furnace dominates, the length increase in the radial direction is much smaller but may be still significant. Thus, this embodiment has special advantages in coping with thermal stresses in both the longitudinal as well as the radial direction.

Optionally, the inlet ends of several jacket tubes can be connected to a common reactant feed line. This further reduces the length of the connection lines and the heat losses related thereto.

Optionally, the product discharge line forms a right angle with the product gas manifold in the connected state. While this increases the number of expansion bends by one as compared to a entirely straight connection, the arrangement is still robust and serves to decrease the building height of the steam reformer, and reduces the length of the connection lines and the heat losses related thereto.

According to a second aspect, the present invention provides a reformer furnace comprising a floor, a ceiling and side walls forming a furnace interior, wherein a plurality of reformer tubes as described above are arranged within the furnace interior and are heated by burners.

Optionally, the plurality of reformer tubes are arranged in rows, preferably in parallel rows, wherein each two reformer tubes adjacent in a row are connected to a common reactant feed line. This further reduces the length of the connection lines and the heat losses related thereto.

Optionally, the present invention provides a use of a reformer tube and/or a reformer furnace as described above for steam reforming a hydrocarbonaceous feed stream with steam to a crude synthesis gas stream.

According to a third aspect, the present invention provides a process for steam reforming a hydrocarbonaceous feed stream with steam to form a synthesis gas stream containing carbon monoxide and hydrogen, comprising the steps of:

(a) providing a plurality of reformer tubes as described above in a reformer furnace;

(b) connecting the reactant feed lines of the reformer tubes to a common reactant feed system;

(c) connecting the product discharge lines of the reformer tubes to a common product gas manifold;

(d) injecting the hydrocarbonaceous feed stream through the reactant feed system and the reactant feed lines of the reformer tubes;

(e) reacting the hydrocarbonaceous feed stream with steam in the reformer tubes under steam reforming conditions to form a crude synthesis gas stream;

(f) discharging the crude synthesis gas stream from the reformer tubes via the product discharge lines and the common product gas manifold; and

(g) feeding the crude synthesis gas stream to at least one further work-up, separation, purification or conditioning step, and discharging a purified or conditioned synthesis gas stream and/or its constituents hydrogen and/or carbon monoxide.

The reformer tube with the fixed-floating bearing arrangement that is provided in the process according to the present invention are of advantage in that a rigid connection in combination with the floating bearing is used for absorbing stress forces due to the thermal expansion of the pressure-bearing cylindrical jacket tube of the reformer tube in an axial (longitudinal) and/or radial direction. The thermal linear expansion of the reformer tube is completely transferred from the product discharge line to the connected reactant feed line and compensated by the reactant feed line by means of the floating bearing. Thus, the additional expansion bends in the reactant feed line (i.e. hairpins, pigtails) are avoided, thereby reducing the overall height or size of an entire synthesis gas plant system, and also reducing heat losses by shortening the transfer lines, namely the reactant feed line, and the product discharge line. Moreover, due to the large vertical transmission of forces via the product discharge line into the reactant feed line, the bending forces, loads, and stresses acting on the product discharge line are reduced which results in an increase in the expected service life and an increase in the operational reliability of the reformer furnace.

Embodiments of the present invention substantially eliminate or at least partially address the aforementioned technical drawbacks in existing technologies by providing a rigid connection in combination with a floating bearing arrangement in the reformer tube for absorbing stress forces due to thermal expansion in the reformer tube.

**DETAILED DESCRIPTION OF THE DRAWINGS**

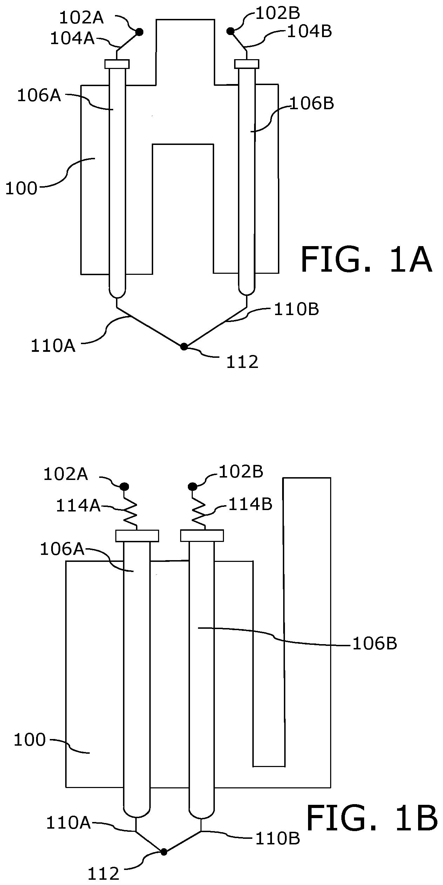

FIGS. 1A-1D are schematic illustrations of arrangements and configurations of reformed tubes in a reformer furnace 100 according to the prior art. The reformer furnace 100 may be arranged in different arrangements such as a radiant wall arrangement, a top-fired arrangement, a bottom fired arrangement and a terrace-wall arrangement.

FIG. 1A shows a reformer furnace 100 with exemplary two reformer tubes, arranged in a radiant wall arrangement including feed distribution systems 102A and 102B, feed lines 104A and 104B, reformer tubes 106A and 106B, product collector lines 110A and 110B,

and a feed manifold 112. The feed lines 104A and 104B are connected to an inlet of each reformer tubes 106A and 106B. The feed lines 104A and 104B are arranged at an angle to the reformer tubes 106A and 106B. The feed distribution systems 102A and 102B are connected to the feed lines 104A and 104B through a pipe of a smaller diameter than the feed lines 104A and 104B to transmit to the reformer tubes 106A and 106B. The reformer tubes 106A and 106B are connected to the product collector lines 110A and 110B via a pipe of a smaller diameter than the product collector lines 110A and 110B. The product collector lines 110A and 110B have an outlet and are connected to the product manifold 112.

FIG. 1B shows a reformer furnace 100 with exemplary two reformer tubes, arranged in a top-fired arrangement, including feed distribution systems 102A and 102B, feed lines 114A and 114B, reformer tubes 106A and 106B, product collector lines 110A and 110B, and a feed manifold 112. The feed lines 114A and 114B are connected to an inlet of each reformer tubes 106A and 106B. The feed lines 114A and 114B include one or more bends. The feed distribution systems 102A and 102B are connected to the feed lines 114A and 114B through a pipe of a smaller diameter than the feed lines 114A and 114B to transmit to the reformer tubes 106A and 106B. The reformer tubes 106A and 106B are connected to the product collector lines 110A and 110B via a pipe of a smaller diameter than the product collector lines 110A and 110B. The product collector lines 110A and 110B have an outlet and are connected to the product manifold 112.

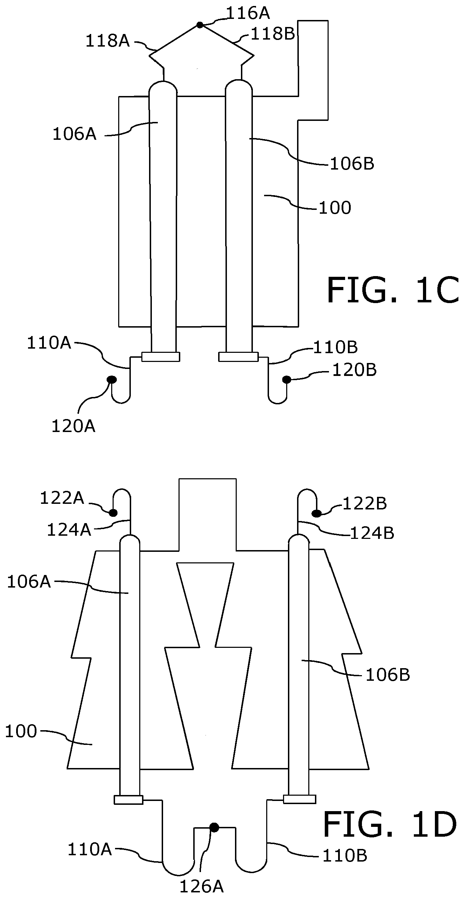

FIG. 1C shows a reformer furnace 100 with exemplary two reformer tubes, arranged in a bottom-fired arrangement, including a feed distribution system 116A, feed lines 118A and 118B, reformer tubes 106A and 106B, product collector lines 110A and 110B, and feed manifolds 120A and 120B. The feed lines 118A and 118B are connected to an inlet of each reformer tubes 106A and 106B. The feed lines 118A and 118B include a bend. The feed distribution system 116A is connected to the feed lines 118A and 118B through a pipe of a smaller diameter than the feed lines 118A and 118B. The reformer tubes 106A and 106B are connected to the product collector lines 110A and 110B via a pipe of a smaller diameter than the product collector lines 110A and 110B. The product collector lines 110A and 110B are in an example U-shaped and have an outlet and are connected to the product manifolds 120A and 120B.

FIG. 1D shows a reformer furnace 100 with exemplary two reformer tubes, arranged in a terrace wall arrangement, including feed distribution systems 122A and 122B, feed lines 124A and 124B, which are in an example U-shaped, reformer tubes 106A and 106B, product collector lines 110A and 110B, and a feed manifold 126A. The feed lines 124A and 124B are connected to an inlet of each reformer tube 106A and 106B. The feed lines 124A and 124B include a hairpin or a pigtail bend. The reformer tubes 106A and 106B are connected to the feed lines **124A** and **124B** through a pipe of a smaller diameter than the feed lines **124A** and **124B.** The reformer tubes **106A** and **106B** are connected to the product collector lines **110A** and **110B** via a pipe of a smaller diameter than the product collector lines **110A** and **110B.** The product collector lines **110A** and **110B** have an outlet and are connected to the product manifold **126A.**

In an example, the superheated mixture of natural gas or methane and steam is fed to the individual reformer tubes **106A** and **106B** that are arranged in the reformer furnace **100** using the feed distribution system (e.g. **102A** and **102B, 116A, 122A** and **122B).** The operating temperature of the feed lines may be up to 650 °C, which results in considerable thermal expansion. The piping system (i.e. feed lines and product collector lines) may absorb the thermal expansions.

During operation, the feed lines (e.g. **104A** and **104B, 114A** and **114B, 118A** and **118B,** and **124A** and **124B)** of various arrangements (i.e. a radiant wall, a top-fired wall, a bottom fired wall and a terrace-wall) in the reformer furnace **100** undergo elongation in the vertical direction due to thermal expansion. The reformer tubes **106A** and **106B** change the position of the product collector lines **110A** and **110B** in the vertical direction. The reformer tubes **106A** and **106B** experience a thermal expansion of up to 300 millimeters (mm) (i.e. upward thermal linear expansion). Due to this arrangement, the product collector lines **110A** and **110B** absorb upward thermal expansion. The operating temperature of the reformer furnace **100** results in thermal linear expansions of the reactant feed lines (e.g. **104A** and **104B, 114A** and **114B, 118A** and **118B,** and **124A** and **124B)** and displacements of the feed and/or product manifolds (e.g. **112, 120A** and **120B,** and **126A)** of various arrangements of the reformer furnace **100.**

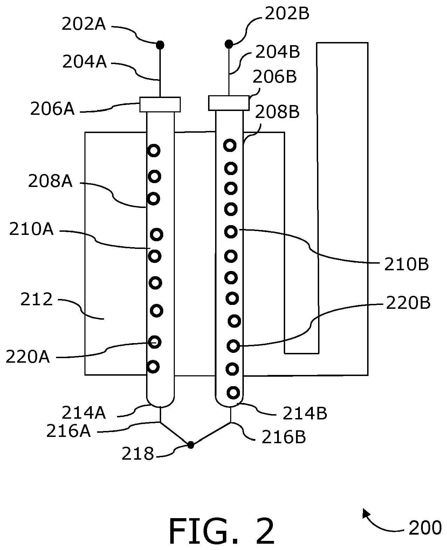

FIG. 2 is a schematic illustration of a reformer furnace **200** with a double reactant feed system according to an embodiment of the present invention. The reformer furnace **200** includes reactant feed systems **202A** and **202B,** reactant feed lines **204A** and **204B,** floating bearings **206A** and **206B,** reformer tubes **208A** and **208B** comprising pressure-bearing cylindrical jacket tubes **210A** and **210B,** a furnace interior **212,** fixed bearings **214A** and **214B,** product discharge lines **216A** and **216B,** and a product gas manifold **218.**

The reformer furnace **200** may include a floor, a ceiling or side walls to form the furnace interior **212,** which arranges the reactant feed systems **202A** and **202B,** the reactant feed lines **204A** and **204B,** the floating bearings **206A** and **206B,** the reformer tubes **208A** and **208B,** the pressure-bearing cylindrical jacket tubes **210A** and **210B,** the fixed bearings **214A** and **214B,** the product discharge lines **216A** and **216B,** and the product gas manifold **218** in the furnace interior **212.** Optionally, the reformer furnace **200** has one or more reformer tubes that are arranged within the furnace interior **212** and are heated by burners.

The pressure-bearing cylindrical jacket tube **210A** and **210B** is arranged to contain a catalyst **220A** and **220B** as a bulk catalyst, a catalyst bed of catalyst particles, structured packing, honeycomb catalyst, or combinations thereof. An inlet end of the pressure-bearing cylindrical jacket tube **(210A** and **210B)** is connectable to the reactant feed lines **204A** and **204B.** The reactant feed lines **204A** and **204B** are connectable to the reactant feed systems **202A** and **202B.** The fixed bearings **214A** and **214B** are located at an outlet end of the pressure-bearing cylindrical jacket tubes **210A** and **210B** and the floating bearings **206A** and **206B** are located at an inlet end of the pressure-bearing cylindrical jacket tubes **210A** and **210B.** The floating bearings **206A** and **206B** may be designed as a rolling bearing, a ball bearing, a plain bearing or a floating support bearing. The outlet end of the pressure-bearing cylindrical jacket tubes **210A** and **210B** is connectable to the product discharge lines **216A** and **216B.** The product discharge lines **216A** and **216B** are connectable to the product gas manifold **218.** Optionally, the product discharge lines **216A** and **216B** form a right angle with the product gas manifold **218** in a connected state.

The pressure-bearing cylindrical jacket tubes **210A** and **210B** are supported in a direction of their longitudinal axis using a fixed-floating bearing arrangement (i.e. the floating bearings **206A** and **206B,** and the fixed bearings **214A** and **214B)** to allow thermal expansion of the pressure-bearing cylindrical jacket tubes **210A** and **210B** in a longitudinal direction. Optionally, the floating bearings **206A** and **206B** and the fixed bearings **214A** and **214B** absorb stress forces due to the thermal expansion of the pressure-bearing cylindrical jacket tubes **210A** and **210B** in a radial direction. The thermal linear expansion of the reformer tubes **208A** and **208B** is transferred to the reactant feed systems **202A** and **202B** and is compensated using the floating bearing **206A** and **206B.**

Optionally, the reactant feed lines **204A** and **204B** are connected to one or more series or rows of reformer tubes through one or more individual outlets of the reactant feed systems **202A** and **202B.** Optionally, the reactant feed lines **204A** and **204B** include only one single change of direction. The only one single change of direction may be 90°.

Optionally, the product discharge line (e.g. **216A** and **216B)** has no change of direction and its longitudinal axis coincides with or is aligned with the longitudinal axis of the pressure-bearing cylindrical jacket tubes **210A** and **210B.** Optionally, inlet ends of one or more jacket tubes can be connected to a common reactant feed line. Optionally, the one or more reformer tubes are arranged in rows, preferably in parallel rows. Optionally, each of the one or more reformer tubes adjacent in a row are connected to the common reactant feed line. The reformer furnace **200** steam reforms a hydrocarbonaceous feed stream with steam to form a crude synthesis gas stream.

The bearing arrangement of the reformer tube (208A, 208B) according to the present invention is of advantage in that a rigid connection in combination with the floating bearing (206A, 206B) is used for absorbing stress forces due to the thermal expansion of the pressure-bearing cylindrical jacket tube (210A, 210B) of the reformer tube (208A, 208B) in an axial (longitudinal) and/or radial direction. The thermal linear expansion of the reformer tube (208A, 208B) is completely transferred from the product discharge line (216A, 216B) to the connected reactant feed line and compensated by the reactant feed line (204A, 204B) by means of the floating bearing (206A, 206B). Thus, the additional expansion bends in the reactant feed line (i.e. hairpins, pigtails) (204A, 204B) are avoided, thereby reducing the overall height or size of an entire synthesis gas plant system, and also reducing heat losses by shortening the transfer lines, namely the reactant feed line, and the product discharge line. Moreover, due to the large vertical transmission of forces via the product discharge line (216A, 216B) into the reactant feed line, the bending moments, loads, and stresses acting on the product discharge line (216A, 216B) are reduced which results in an increase in the expected service life and an increase in the operational reliability of the reformer furnace 200.

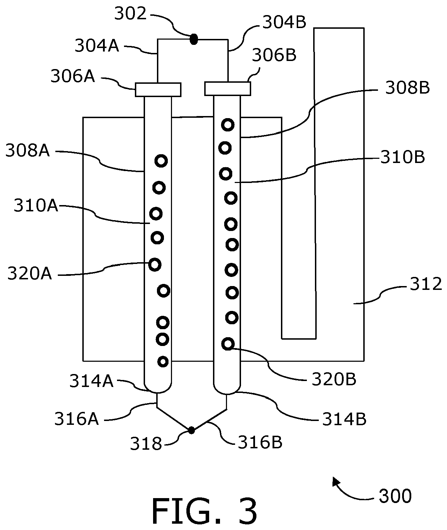

FIG. 3 is a schematic illustration a reformer furnace 300 with a single reactant feed system according to an embodiment of the present invention. The reformer furnace 300 includes a reactant feed system 302, reactant feed lines 304A and 304B, floating bearings 306A and 306B, reformer tubes 308A and 308B comprising pressure-bearing cylindrical jacket tubes 310A and 310B, a furnace interior 312, fixed bearings 314A and 314B, product discharge lines 316A and 316B, and a product gas manifold 318.

The pressure-bearing cylindrical jacket tube 310A and 310B is arranged to contain a catalyst 320A and 320B as a bulk catalyst, a catalyst bed of catalyst particles, structured packing, honeycomb catalyst, or combinations thereof. An inlet end of the pressure-bearing cylindrical jacket tube (e.g. 310A and 310B) is connectable to the reactant feed lines 304A and 304B. The reactant feed lines 304A and 304B are connectable to the reactant feed system 302. The fixed bearings 314A and 314B are located at an outlet end of the pressure-bearing cylindrical jacket tubes 310A and 310B and the floating bearings 306A and 306B are located at an inlet end of the pressure-bearing cylindrical jacket tubes 310A and 310B. The floating bearings 306A and 306B may be designed as a rolling bearing, a ball bearing, a plain bearing or a floating support bearing. The outlet end of the pressure-bearing cylindrical jacket tubes 310A and 310B is connectable to the product discharge lines 316A and 316B. The product discharge lines 316A and 316B are connectable to the product gas manifold 318. Optionally, the product discharge lines 316A and 316B form a right angle with the product gas manifold 318 in a connected state.

The pressure-bearing cylindrical jacket tubes 310A and 310B are supported in a direction of their longitudinal axis using a fixed-floating bearing arrangement (i.e. the floating bearings 306A and 306B, and the fixed bearings 314A and 314B) to allow thermal expansion of the pressure-bearing cylindrical jacket tubes 310A and 310B in a longitudinal direction. Optionally, the floating bearings 306A and 306B and the fixed bearings 314A and 314B absorb stress forces due to the thermal expansion of the pressure-bearing cylindrical jacket tubes 310A and 310B in a radial direction. The thermal linear expansion of the reformer tubes 308A and 308B is transferred to the reactant feed system 302 and is compensated using the floating bearing 306A and 306B.

The reformer tube with the fixed-floating bearing arrangement that is provided in the process is of advantage in that a rigid connection in combination with the floating bearing is used for absorbing stress forces due to the thermal expansion of the pressure-bearing cylindrical jacket tube of the reformer tube in an axial (longitudinal) and/or radial direction. The thermal linear expansion of the reformer tube is completely transferred from the product discharge line to the connected reactant feed line and compensated by the reactant feed line by means of the floating bearing. Thus, the additional expansion bends in the reactant feed line (i.e. hairpins, pigtails) are avoided, thereby reducing the overall height or size of an entire synthesis gas plant system, and also reducing heat losses by shortening the transfer lines, namely the reactant feed line, and the product discharge line. Moreover, due to the large vertical transmission of forces via the product discharge line into the reactant feed line, the bending moments, loads, and stresses acting on the product discharge line are reduced which results in an increase in the expected service life and an increase in the operational reliability of the reformer furnace.

## Claims

1. Reformer tube (208A, 208B, 308A, 308B) for a steam reformer, comprising:

   (a) a pressure-bearing cylindrical jacket tube (210A, 210B, 310A, 310B) arranged to contain a catalyst (220A, 220B, 320A, 320B) as a bulk catalyst, a catalyst bed of catalyst particles, structured packing, honeycomb catalyst, or combinations thereof;
   (b) an inlet end of the pressure-bearing cylindrical jacket tube (210A, 210B, 310A, 310B) connectable to a reactant feed line (204A, 204B, 304A, 304B);
   (c) the reactant feed line (204A, 204B, 304A, 304B) connectable to a reactant feed system (202A, 202B, 302);
   (d) an outlet end of the pressure-bearing cylindrical jacket tube (210A, 210B, 310A, 310B) connectable to a product discharge line (216A, 216B, 316A, 316B);

(e) the product discharge line (216A, 216B, 316A, 316B) connectable to a product gas manifold (218, 318);

wherein

(f) the pressure-bearing cylindrical jacket tube (210A, 210B, 310A, 310B) is supported in the direction of its longitudinal axis by means of a fixed-floating bearing arrangement to allow thermal expansion of the pressure-bearing cylindrical jacket tube (210A, 210B, 310A, 310B) in longitudinal direction, wherein

(g) the fixed bearing (214A, 214B, 314A, 314B) is located at the outlet end of the outer pressure-bearing cylindrical jacket tube (210A, 210B, 310A, 310B) and the floating bearing (206A, 206B, 306A, 306B) is located at the inlet end of the outer pressure-bearing cylindrical jacket tube (210A, 210B, 310A, 310B).

2. Reformer tube (208A, 208B, 308A, 308B) according to claim 1, **characterized in that** the reactant feed line (204A, 204B, 304A, 304B) has only one single change of direction, preferably only one single change of direction of 90°.

3. Reformer tube (208A, 208B, 308A, 308B) according to claim 1 or 2, **characterized in that** the product discharge line (216A, 216B, 316A, 316B) has no change of direction and its longitudinal axis coincides with or is aligned with the longitudinal axis of the pressure-bearing cylindrical jacket tube (210A, 210B, 310A, 310B).

4. Reformer tube (208A, 208B, 308A, 308B) according to one of the preceding claims, **characterized in that** the floating bearing (206A, 206B, 306A, 306B) is designed as a rolling bearing, ball bearing, plain bearing or floating support bearing.

5. Reformer tube (208A, 208B, 308A, 308B) according to one of the preceding claims, **characterized in that** the floating bearing (206A, 206B, 306A, 306B) and the fixed bearing (214A, 214B, 314A, 314B) are designed such that they can absorb stress forces due to thermal expansion of the pressure-bearing cylindrical jacket tube (210A, 210B, 310A, 310B) in the radial direction.

6. Reformer tube (208A, 208B, 308A, 308B) according to one of the preceding claims, **characterized in that** the inlet ends of several jacket tubes can be connected to a common reactant feed line.

7. Reformer tube (208A, 208B, 308A, 308B) according to any of the preceding claims, **characterized in that** the product discharge line (216A, 216B, 316A, 316B) forms a right angle with the product gas manifold (218, 318) in the connected state.

8. Reformer furnace (200, 300) comprising a floor, a ceiling and side walls forming a furnace interior, wherein a plurality of reformer tubes according to any one of claims 1 to 7 are arranged within the furnace interior and are heated by burners.

9. Reformer furnace (200, 300) according to claim 8, **characterized in that** the plurality of reformer tubes are arranged in rows, preferably in parallel rows, wherein each two reformer tubes adjacent in a row are connected to a common reactant feed line.

10. Use of a reformer tube (208A, 208B, 308A, 308B) according to claim 1 to 7 and/or a reformer furnace (200, 300) according to claim 8 to 9 for steam reforming a hydrocarbonaceous feed stream with steam to a crude synthesis gas stream.

11. Process for steam reforming a hydrocarbonaceous feed stream with steam to form a synthesis gas stream containing carbon monoxide and hydrogen, comprising the steps of:

(a) providing a plurality of reformer tubes according to claims 1 to 7 in a reformer furnace (200, 300) according to claims 8 to 9;

(b) connecting the reactant feed lines (204A, 204B, 304A, 304B) of the reformer tubes (208A, 208B, 308A, 308B) to a common reactant feed system;

(c) connecting the product discharge lines (216A, 216B, 316A, 316B) of the reformer tubes (208A, 208B, 308A, 308B) to a common product gas manifold;

(d) injecting the hydrocarbonaceous feed stream through the reactant feed system (202A, 202B, 302) and the reactant feed lines (204A, 204B, 304A, 304B) of the reformer tubes (208A, 208B, 308A, 308B);

(e) reacting the hydrocarbonaceous feed stream with steam in the reformer tubes (208A, 208B, 308A, 308B) under steam reforming conditions to form a crude synthesis gas stream;

(f) discharging the crude synthesis gas stream from the reformer tubes (208A, 208B, 308A, 308B) via the product discharge lines (216A, 216B, 316A, 316B) and the common product gas manifold; and

(g) feeding the crude synthesis gas stream to at least one further work-up, separation, purification or conditioning step, discharging a purified or conditioned synthesis gas stream and/or its constituents hydrogen and/or carbon monoxide.

**Patentansprüche**

1.  Reformerrohr (208A, 208B, 308A, 308B) für einen Dampfreformer, umfassend:

    (a) ein drucktragendes zylindrisches Mantelrohr (210A, 210B, 310A, 310B), dafür ausgelegt, einen Katalysator (220A, 220B, 320A, 320B) als einen Massekatalysator, ein Katalysatorbett aus Katalysatorpartikeln, strukturierte Packung, Wabenkatalysator oder Kombinationen davon zu enthalten;
    (b) ein Einlassende des drucktragenden zylindrischen Mantelrohrs (210A, 210B, 310A, 310B), das mit einer Reaktantenzufuhrleitung (204A, 204B, 304A, 304B) verbindbar ist;
    (c) die Reaktantenzufuhrleitung (204A, 204B, 304A, 304B), die mit einem Reaktantenzufuhrsystem (202A, 202B, 302) verbindbar ist;
    (d) ein Auslassende des drucktragenden zylindrischen Mantelrohrs (210A, 210B, 310A, 310B), das mit einer Produktauslassleitung (216A, 216B, 316A, 316B) verbindbar ist;
    (e) die Produktauslassleitung (216A, 216B, 316A, 316B), die mit einem Produktgasverteiler (218, 318) verbindbar ist;
    wobei
    (f) das drucktragende zylindrische Mantelrohr (210A, 210B, 310A, 310B) in der Richtung seiner Längsachse mithilfe einer fest-lose-Lageranordnung gelagert ist, um Wärmeausdehnung des drucktragenden zylindrischen Mantelrohrs (210A, 210B, 310A, 310B) in Längsrichtung zu erlauben,
    wobei
    (g) das Festlager (214A, 214B, 314A, 314B) an dem Auslassende des äußeren drucktragenden zylindrischen Mantelrohrs (210A, 210B, 310A, 310B) angeordnet ist und das Loslager (206A, 206B, 306A, 306B) an dem Einlassende des äußeren drucktragenden zylindrischen Mantelrohrs (210A, 210B, 310A, 310B) angeordnet ist.

2.  Reformerrohr (208A, 208B, 308A, 308B) nach Anspruch 1, **dadurch gekennzeichnet, dass** die Reaktantenzufuhrleitung (204A, 204B, 304A, 304B) nur eine einzige Richtungsänderung, vorzugsweise nur eine einzige Richtungsänderung von 90°, aufweist.

3.  Reformerrohr (208A, 208B, 308A, 308B) nach Anspruch 1 oder 2, **dadurch gekennzeichnet, dass** die Produktauslassleitung (216A, 216B, 316A, 316B) keine Richtungsänderung aufweist und ihre Längsachse mit der Längsachse des drucktragenden zylindrischen Mantelrohrs (210A, 210B, 310A, 310B) zusammenfällt oder damit ausgerichtet ist.

4.  Reformerrohr (208A, 208B, 308A, 308B) nach einem der vorstehenden Ansprüche, **dadurch gekennzeichnet, dass** das Loslager (206A, 206B, 306A, 306B) als Wälzlager, Kugellager, Gleitlager oder schwimmendes Stützlager gestaltet ist.

5.  Reformerrohr (208A, 208B, 308A, 308B) nach einem der vorstehenden Ansprüche, **dadurch gekennzeichnet, dass** das Loslager (206A, 206B, 306A, 306B) und das Festlager (214A, 214B, 314A, 314B) so gestaltet sind, dass sie Spannungskräfte durch Wärmeausdehnung des drucktragenden zylindrischen Mantelrohrs (210A, 210B, 310A, 310B) in der radialen Richtung aufnehmen können.

6.  Reformerrohr (208A, 208B, 308A, 308B) nach einem der vorstehenden Ansprüche, **dadurch gekennzeichnet, dass** die Einlassenden mehrerer Mantelrohre mit einer gemeinsamen Reaktantenzufuhrleitung verbunden werden können.

7.  Reformerrohr (208A, 208B, 308A, 308B) nach einem der vorstehenden Ansprüche, **dadurch gekennzeichnet, dass** die Produktauslassleitung (216A, 216B, 316A, 316B) einen rechten Winkel mit dem Produktgasverteiler (218, 318) in dem verbundenen Zustand bildet.

8.  Reformerofen (200, 300), umfassend einen Boden, eine Decke und Seitenwände, die einen Ofeninnenraum bilden, wobei eine Vielzahl von Reformerrohren nach einem der Ansprüche 1 bis 7 in dem Ofeninnenraum angeordnet sind und durch Brenner beheizt werden.

9.  Reformerofen (200, 300) nach Anspruch 8, **dadurch gekennzeichnet, dass** die Vielzahl von Reformerrohren in Reihen, vorzugsweise in parallelen Reihen, angeordnet sind, wobei jeweils zwei in einer Reihe benachbarte Reformerrohre mit einer gemeinsamen Reaktantenzufuhrleitung verbunden sind.

10. Verwendung eines Reformerrohrs (208A, 208B, 308A, 308B) nach Anspruch 1 bis 7 und/oder eines Reformerofens (200, 300) nach Anspruch 8 bis 9 zur Dampfreformierung eines kohlenwasserstoffhaltigen Zufuhrstroms mit Dampf zu einem rohen Synthesegasstrom.

11. Verfahren zur Dampfreformierung eines kohlenwasserstoffhaltigen Zufuhrstroms mit Dampf, um einen Synthesegasstrom zu bilden, der Kohlenmonoxid und Wasserstoff enthält, umfassend die Schritte:

    (a) Bereitstellen einer Vielzahl von Reformerrohren nach Ansprüchen 1 bis 7 in einem Reformerofen (200, 300) nach Ansprüchen 8 bis 9;

(b) Verbinden der Reaktantenzufuhrleitungen (204A, 204B, 304A, 304B) der Reformerrohre (208A, 208B, 308A, 308B) mit einem gemeinsamen Reaktantenzufuhrsystem;

(c) Verbinden der Produktauslassleitungen (216A, 216B, 316A, 316B) der Reformerrohre (208A, 208B, 308A, 308B) mit einem gemeinsamen Produktgasverteiler;

(d) Einspritzen des kohlenwasserstoffhaltigen Zufuhrstroms durch das Reaktantenzufuhrsystem (202A, 202B, 302) und die Reaktantenzufuhrleitungen (204A, 204B, 304A, 304B) der Reformerrohre (208A, 208B, 308A, 308B);

(e) Umsetzen des kohlenwasserstoffhaltigen Zufuhrstroms mit Dampf in den Reformerrohren (208A, 208B, 308A, 308B) unter Dampfreformierungsbedingungen, um einen rohen Synthesegasstrom zu bilden;

(f) Ausgeben des rohen Synthesegasstroms aus den Reformerrohren (208A, 208B, 308A, 308B) über die Produktauslassleitungen (216A, 216B, 316A, 316B) und den gemeinsamen Produktgasverteiler; und

(g) Zuführen des rohen Synthesegasstroms zu wenigstens einem weiteren Aufarbeitungs-, Trenn-, Reinigungs- oder Konditionierungsschritt, Ausgeben eines gereinigten oder konditionierten Synthesegasstroms und/oder seiner Bestandteile Wasserstoff und/oder Kohlenmonoxid.

**Revendications**

1.  Tube de reformage (208A, 208B, 308A, 308B) pour un vaporeformeur, comprenant :

    (a) un tube enveloppe cylindrique supportant la pression (210A, 210B, 310A, 310B) agencé pour contenir un catalyseur (220A, 220B, 320A, 320B) sous la forme d'un catalyseur en vrac, d'un lit catalytique de particules de catalyseur, d'un garnissage structuré, d'un catalyseur en nid d'abeilles, ou d'une combinaison de ceux-ci ;

    (b) une extrémité d'entrée du tube enveloppe cylindrique supportant la pression (210A, 210B, 310A, 310B) étant raccordable à une ligne d'alimentation en réactifs (204A, 204B, 304A, 304B) ;

    (c) la ligne d'alimentation en réactifs (204A, 204B, 304A, 304B) étant raccordable à un système d'alimentation en réactifs (202A, 202B, 302) ;

    (d) une extrémité de sortie du tube enveloppe cylindrique supportant la pression (210A, 210B, 310A, 310B) étant raccordable à une ligne de décharge de produits (216A, 216B, 316A, 316B) ;

    (e) la ligne de décharge de produits (216A, 216B, 316A, 316B) étant raccordable à un collecteur de produits gazeux (218, 318) ;

    dans lequel

    (f) le tube enveloppe cylindrique supportant la pression (210A, 210B, 310A, 310B) est soutenu dans la direction de son axe longitudinal au moyen d'un agencement de paliers fixe-flottant pour permettre la dilatation thermique du tube enveloppe cylindrique supportant la pression (210A, 210B, 310A, 310B) dans la direction longitudinale,

    dans lequel

    (g) le palier fixe (214A, 214B, 314A, 314B) se situe à l'extrémité de sortie du tube enveloppe cylindrique supportant la pression externe (210A, 210B, 310A, 310B) et le palier flottant (206A, 206B, 306A, 306B) se situe à l'extrémité d'entrée du tube enveloppe cylindrique supportant la pression externe (210A, 210B, 310A, 310B).

2.  Tube de reformage (208A, 208B, 308A, 308B) selon la revendication 1, **caractérisé en ce que** la ligne d'alimentation en réactifs (204A, 204B, 304A, 304B) ne présente qu'un seul changement de direction, de préférence qu'un seul changement de direction de 90°.

3.  Tube de reformage (208A, 208B, 308A, 308B) selon la revendication 1 ou 2, **caractérisé en ce que** la ligne de décharge de produits (216A, 216B, 316A, 316B) ne présente aucun changement de direction et son axe longitudinal coïncide ou est aligné avec l'axe longitudinal du tube enveloppe cylindrique supportant la pression (210A, 210B, 310A, 310B).

4.  Tube de reformage (208A, 208B, 308A, 308B) selon une des revendications précédentes, **caractérisé en ce que** le palier flottant (206A, 206B, 306A, 306B) est conçu comme un palier à roulement, un roulement à billes, un palier lisse ou un palier-support flottant.

5.  Tube de reformage (208A, 208B, 308A, 308B) selon une des revendications précédentes, **caractérisé en ce que** le palier flottant (206A, 206B, 306A, 306B) et le palier fixe (214A, 214B, 314A, 314B) sont conçus de telle sorte qu'ils peuvent absorber des contraintes dues à la dilatation thermique du tube enveloppe cylindrique supportant la pression (210A, 210B, 310A, 310B) dans la direction radiale.

6.  Tube de reformage (208A, 208B, 308A, 308B) selon une des revendications précédentes, **caractérisé en ce que** les extrémités d'entrée de plusieurs tubes enveloppes peuvent être raccordées à une ligne d'alimentation en réactifs commune.

**7.** Tube de reformage (208A, 208B, 308A, 308B) selon l'une quelconque des revendications précédentes, **caractérisé en ce que** la ligne de décharge de produits (216A, 216B, 316A, 316B) forme un angle droit avec le collecteur de produits gazeux (218, 318) à l'état raccordé.

**8.** Four de reformage (200, 300) comprenant une sole, une voûte et des parois latérales formant un intérieur de four, dans lequel une pluralité de tubes de reformage selon l'une quelconque des revendications précédentes 1 à 7 sont disposés dans l'intérieur de four et sont chauffés par des brûleurs.

**9.** Four de reformage (200, 300) selon la revendication 8, **caractérisé en ce que** la pluralité de tubes de reformage sont disposés en rangées, de préférence en rangées parallèles, dans lequel chaque paire de tubes de reformage adjacents dans une rangée est raccordée à une ligne d'alimentation en réactifs commune.

**10.** Utilisation d'un tube de reformage (208A, 208B, 308A, 308B) selon les revendications 1 à 7 et/ou d'un four de reformage (200, 300) selon les revendications 8 et 9 pour le vaporeformage d'un courant d'alimentation hydrocarboné avec de la vapeur pour obtenir un courant de gaz de synthèse brut.

**11.** Procédé de vaporeformage d'un courant d'alimentation hydrocarboné avec de la vapeur pour former un courant de gaz de synthèse brut du monoxyde de carbone et de l'hydrogène, comprenant les étapes suivantes :

(a) obtention d'une pluralité de tubes de reformage selon les revendications 1 à 7 dans un four de reformage (200, 300) selon les revendications 8 et 9 ;
(b) raccordement des lignes d'alimentation en réactifs (204A, 204B, 304A, 304B) des tubes de reformage (208A, 208B, 308A, 308B) à un système d'alimentation en réactifs commun ;
(c) raccordement des lignes de décharge de produits (216A, 216B, 316A, 316B) des tubes de reformage (208A, 208B, 308A, 308B) à un collecteur de produits gazeux commun ;
(d) injection du courant d'alimentation hydrocarboné dans le système d'alimentation en réactifs (202A, 202B, 302) et les lignes d'alimentation en réactifs (204A, 204B, 304A, 304B) des tubes de reformage (208A, 208B, 308A, 308B) ;
(e) réaction du courant d'alimentation hydrocarboné avec la vapeur dans les tubes de reformage (208A, 208B, 308A, 308B) dans des conditions de vaporeformage pour former un courant de gaz de synthèse brut ;
(f) décharge du courant de gaz de synthèse brut des tubes de reformage (208A, 208B, 308A, 308B) par le biais des lignes de décharge de produits (216A, 216B, 316A, 316B) et du collecteur de produits gazeux commun ; et
(g) alimentation avec le courant de gaz de synthèse brut d'au moins une autre étape de traitement =- final, séparation, purification ou conditionnement, déchargement d'un courant de gaz de synthèse purifié ou conditionné et/ou de ses constituants hydrogène et/ou monoxyde de carbone.

FIG. 1A

FIG. 1B

FIG. 1C

FIG. 1D

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005287053 A